# EUROPEAN PATENT APPLICATION

(11) **EP 2 031 165 A1**
(43) Date of publication of application: **04.03.2009**
(21) Application number: 07017093.1
(22) Date of filing: 31.08.2007
(51) Int. Cl.: E05B 73/00

(54) **Automatic unlocking system for CD/DVD cases**

(71) Applicant: 3M Innovative Properties Company, St. Paul MN 55133-3427 (US)
(72) Inventor: Pfeiffer, Andreas, 41470 Neuss (DE); Korte, Ralf, 45549 Sprockhövel (DE); Langner, Christoph, 41747 Viersen (DE)
(74) Representative: Vossius & Partner

(57) **Abstract**

The invention relates to a lockable CD/DVD case with a radio frequency identification (RFID) tag encoding at least a "lock"/"unlock"-bit. The case comprises a removable locking member, said case being mechanically locked if the locking member is inserted into the case and unlocked if the locking member is removed from the case. The invention further provides an apparatus and a method for automatic unlocking such a locked case. Said apparatus comprises a receptacle adapted to accommodate at least a portion of the case, a detector for detecting the presence of the case, an RFID reader for reading at least the "lock"/"unlock"-bit, a first magnet for releasing the locking member, a second magnet for removing the locking member and a controller for controlling the magnets in response to the "lock"/"unlock"-bit read by the RFID reader.

## Description

### Field of the Invention

The present invention relates to a lockable CD/DVD case, an automatic unlocking system for such a case and a method of automatic unlocking.

### Background of the Invention

Lockable cases for CDs or DVDs are widely used, in particular in libraries as well as in shops selling CDs or DVDs or CD/DVD rentals. Such cases provide good protection against theft and prevent loss due to carelessness.

An example for such a lockable case or security device for CDs or DVDs is disclosed in WO 02/39451 A2. Said device can be locked by a releasable security member insertable into the device, wherein said security member can only be released by means of a release device.

GB 2 371 597 A describes an apparatus for releasing a security device held within an information storage media holder by a locking means, said apparatus comprising a slot for receiving an edge of the holder and a magnetic release device positioned to release the locking means when the holder is inserted into the slot. Releasing is preferably achieved by a first magnet for releasing the locking means and a second magnet for assisting in withdrawal of the security device from the holder.

WO 2006/012380 A2 discloses a self-check system and a method for renting or purchasing products, preferably digital media. The system comprises a self-check station and a locking apparatus for the media. The method includes a procedure to both rent and return the media without the aid of borrowing facility personnel. The system comprises inter alia a content tag secured to the digital media for containing identification data of the media and an unlocker coupled to a computer which is coupled to a database, wherein the database associates the digital media with a patron identification. A similar system is described in US 6 801 130 B2.

However, a drawback of such a system is its complexity. Several components have to be coordinated and in communication with each other. Thus, the system may be vulnerable to failure.

### Summary of the Invention

It is an object of the present invention to provide an improved system for unlocking lockable CD/DVD cases and cases adapted for said system. It is a further object to provide an improved method for automatic unlocking CD/DVD cases. This object is achieved with the features of the claims.

The underlying idea of the present invention is to provide a lockable CD/DVD case with a radio frequency identification (RFID) tag encoding at least a "lock"/"unlock"-bit. The case comprises a removable locking member, said case being mechanically locked if the locking member is inserted into the case and unlocked if the locking member is removed from the case. The "lock/unlock"-bit may be written or set by any other device, such as a unit connected to a desk or purchase/rental station. However, once the RFID tag contains said bit, a corresponding unlocking apparatus does not have to communicate with any database or depend on a human input. Thus, the system may be used as a stand-alone system.

The locking member preferably comprises a metal latch, which engages with a ridge of the case, when the locking member is fully inserted into the case, said latch being inaccessible once the case is locked. The locking member can be inserted manually, without the help of any apparatus, e.g., a magnet. If the locking member is fully inserted, the case is locked, i.e., the case cannot be opened without the help of an apparatus described further on. It is also contemplated that a CD/DVD is secured in another way than by locking it within a case. For example, the CD/DVD may be mechanically fixed to the case by the locking member. Thus, access to the CD/DVD is partially granted (e.g., to inspect the cover), although the CD/DVD cannot be removed from the case. If the locking member is completely removed from the case, the case is unlocked and may be opened manually or the fixation is released and the CD/DVD may be taken out. If the locking member is partially inserted, the locking member may or may not be removable manually, depending on the specific design.

An example for a case that may be used in accordance with the present invention can be found in WO 02/39451 A2. The security tag mentioned in this document is, however, not suited for the purposes of the present invention.

The present invention also relates to an apparatus for automatic unlocking a locked case as described above. Said apparatus comprises a receptacle adapted to accommodate at least a portion of the case, a detector for detecting the presence of the case, an RFID reader for reading at least the "lock"/"unlock"-bit, a first magnet for releasing the locking member, a second magnet for removing the locking member and a controller for controlling the magnets solely in response to the "lock"/"unlock"-bit read by the RFID reader, i.e. without any communication with a computer network and/or a database.

The receptacle may be, e.g., a slot adapted to hold at least a portion of the case. But it is also conceivable that the receptacle is some kind of a docking station. In particular, the receptacle may be adapted to accommodate cases of different type and/or size.

Several ways of detection of the presence of a case are possible, such as optical, electrical, electronical or mechanical detection. It is also contemplated to use the RFID reader of the apparatus and the RFID tag of the case for detection.

When a case is detected, the RFID reader can be activated in order to read the "lock"/"unlock"-bit of the case. Further information, e.g., identification data of the case or the like may be read as well. However, reading said additional information is not necessary and is not used in order to decide, whether the case will be released or not. The RFID reader may comprise an RFID antenna and/or an RFID reader module.

If the read bit is in the "unlock" state, the controller activates the unlocking mechanism of the apparatus comprising a first magnet and a second magnet. Preferably, the first and second magnets are permanent magnets. The first and second magnets are preferably adapted to provide a force along first and second directions, respectively. Preferably, the first and second directions are substantially perpendicular to each other. Other alignments are possible as well.

The first and second magnets are positioned and aligned with respect to each other and to the case in order to provide forces adapted to disengage the latch of the locking member from the ridge of the case and to attract the locking member to remove it from the case, respectively.

For this purpose, the first and second magnets may be movable, e.g., by a motor. In a preferred embodiment the apparatus further comprises first and/or second solenoids for moving the first and second magnets, respectively. In another preferred embodiment the first and/or second magnet is an electromagnet, which can be switched on and off for the purpose of disengaging the latch and/or removing the locking member.

The apparatus may further have a user interface, wherein the user interface may comprise at least one display (e.g., an LED) adapted to indicate, when a case has or has not been unlocked so that a user of the apparatus is provided with an indication when to remove the case from the apparatus.

Preferably, a container for collecting the removed locking members may be provided as well.

As already mentioned, the apparatus according to the present invention is adapted for (but not limited to) use as a stand-alone system, i.e., it is adapted to work autonomously, independent of an additional computer or a computer-network (e.g., having no electrical or wireless connection to a computer or a computer network) and without communication to any database.

The present invention further relates to a method of automatic unlocking a mechanically locked case as described above, comprising the steps of detecting the case, reading the RFID tag encoding at least a "lock"/"unlock"-bit and unlocking the case, if the read bit is in the "unlock" state by releasing and removing the locking member, or removing the case from the locking member, respectively. Optionally the removed locking member is collected in a container.

In a preferred embodiment of the present invention unlocking the case is performed by moving the first magnet towards the case to a position close to the metal latch of the locking member of the case. Due to the magnetic force of the first magnet a portion of the latch is attracted and thereby disengaged from the ridge of the case. With the latch being disengaged the locking member becomes movable. Then the second magnet is moved towards the case in order to attract the locking member by means of a magnetic force. Both magnets may also be moved simultaneously. Finally, the second magnet together with the attracted locking member is moved away from the case, and the locking member is removed from the second magnet and collected in a container within the apparatus. In another preferred embodiment, the case is removed manually from the apparatus once the locking member is attracted to said second magnet thus separating the case from the locking member. After retrieval of the case the locking member is released from the second magnet and collected in the container.

In case one or both of the two magnets are electromagnets, it may suffice to merely switch them on in order to disengage the latch and/or to attract the locking member instead of moving them towards the case. If the second magnet is an electromagnet, removing the locking member from the second magnet may be achieved by simply switching off the electromagnet.

### Brief Description of the Drawings

These and other aspects of the present invention will be apparent from and elucidated with reference to the embodiments described hereinafter.
- Figure 1: schematically shows a lockable case that can be used according to the present invention;
- Figure 2: schematically shows the locking member of the case shown in Fig.1;
- Figure 3: shows a cross-sectional view taken along line A-A of Fig.1, with the case being closed;
- Figure 4: schematically shows a preferred embodiment of an apparatus for automatic unlocking according to the present invention with a lockable case being partially inserted into the receptacle of the apparatus;
- Figure 5: schematically shows the apparatus of Fig. 4 with the case being fully inserted into the receptacle of the apparatus;
- Figure 6: schematically shows the apparatus of Fig. 4 and Fig. 5 with the locking member being removed from the case;

- Figure 7: schematically shows another preferred embodiment of an apparatus for automatic unlocking according to the present invention with the case being fully inserted into the receptacle of the apparatus; and
- Figure 8: schematically shows the apparatus of Fig. 7 with the locking member being removed from the case.

### Detailed Description of Preferred Embodiments

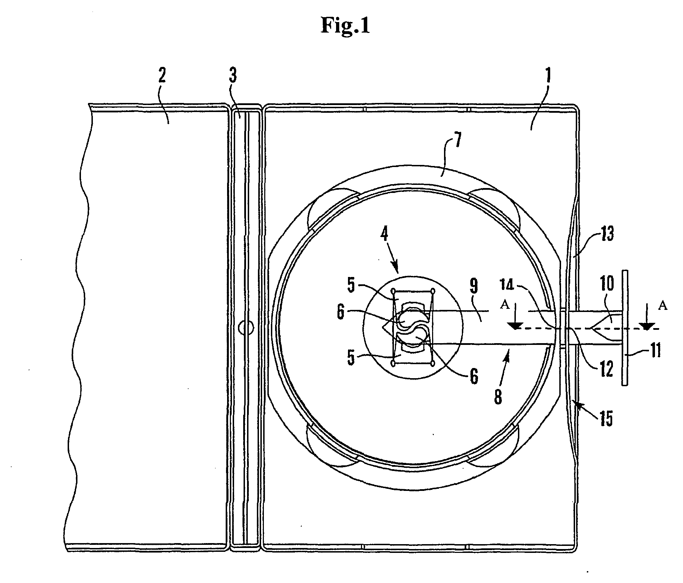

Figure 1 schematically shows a preferred embodiment of a lockable case that can be used according to the present invention. Said case is being described in detail in WO 02/39451 A2. The case generally comprises a base portion 1 and a lid portion 2 connected via a hinge portion 3. The inner side of the base portion 1 comprises a disk engaging mechanism 4 with cantilever arms 5 and button-like members 6 to releasably accommodate the central aperture of a CD/DVD. An upstand 7 is provided on the base portion 1 so as to extend around the periphery of said disk.

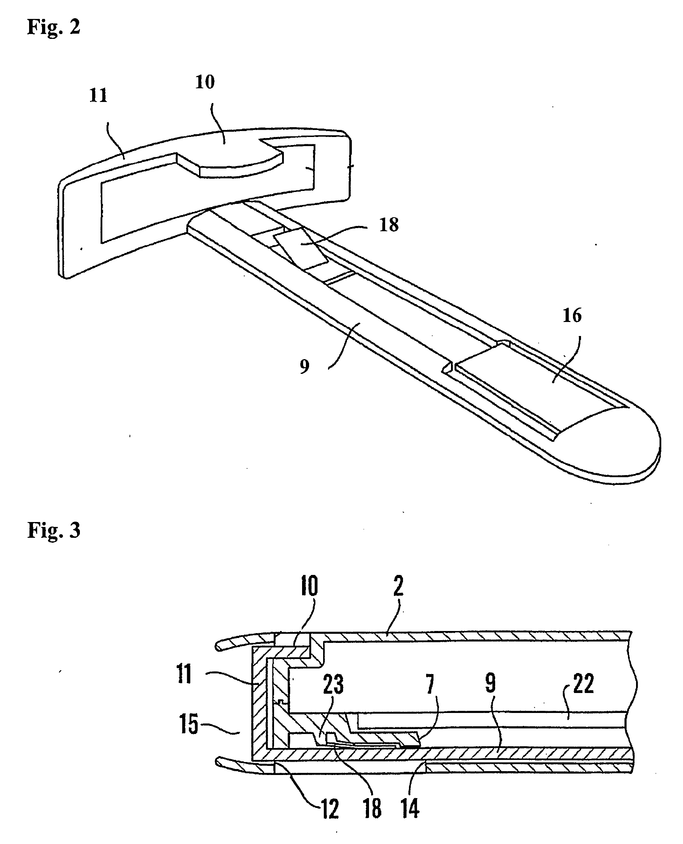

The case further comprises a removable locking member 8 with a first long arm 9 and a second short arm 10, both arms being connected to a head 11. The portions 9, 10 and 11 may be made of a hard plastics material, e.g., glass re-enforced nylon or ABS, and may be preferably 8 to 20 mm, e.g., 15 mm wide and 0.5 to 5 mm thick. But other dimensions are conceivable as well. In particular, portions 9, 10 and 11 may have varying width and thickness along their length. The long arm comprises a metal latch 18 as shown in Fig. 2 and optionally an RFID tag 16. However, said tag may also be placed at another position of the locking member or the case. Head 11 comprises a metal piece or shim adapted to be attracted by a magnet as explained below.

The long arm 9 passes through a slot 12 in a side wall 13 creating a recess 15 in base portion 1 and through a slot 14 in the upstand 7 so that it can extend across the base portion 1 and be fitted beneath the arms 5 in order to prevent operation of the disk release mechanism 4.

Figure 3 shows a cross-sectional view taken along line A-A of Fig.1, with the case being closed, the lid portion 2 being fitted against base portion 1, a disk 22 and the locking member 8 being inserted into the case. The long arm 9 of the locking member 8 is slid through the slots 12 and 14 until the distal end of latch 18 passes the ridge 23. The resilience of the latch 18 then causes the distal end thereof to engage a side of the ridge 23. The locking member 8 is thus locked within the case and cannot be slid back out without disengaging the latch 18 from the ridge 23. At the same time the case is locked by the locking member 8, since long arm 9 and short arm 10 embrace base portion 1 and lid portion 2.

Several different embodiments of said case and said locking member are being contemplated, in particular the different possibilities shown and discussed in WO 02/39451 A2. Furthermore, it is conceivable that the locking member 8 does only fix the disk to the base portion by preventing operation of the disk release mechanism 4 without locking the case. Thus, the disk would be secured while a patron would still have access to the inner region of the case, e.g., to inspect the cover of the disk. Vice versa only the case could be locked by the locking member 8 without blocking the disk release mechanism 4. Then, the long arm 9 of locking member 8 could be much shorter since it would not need to fit beneath the arms 5 of the disk release mechanism 4.

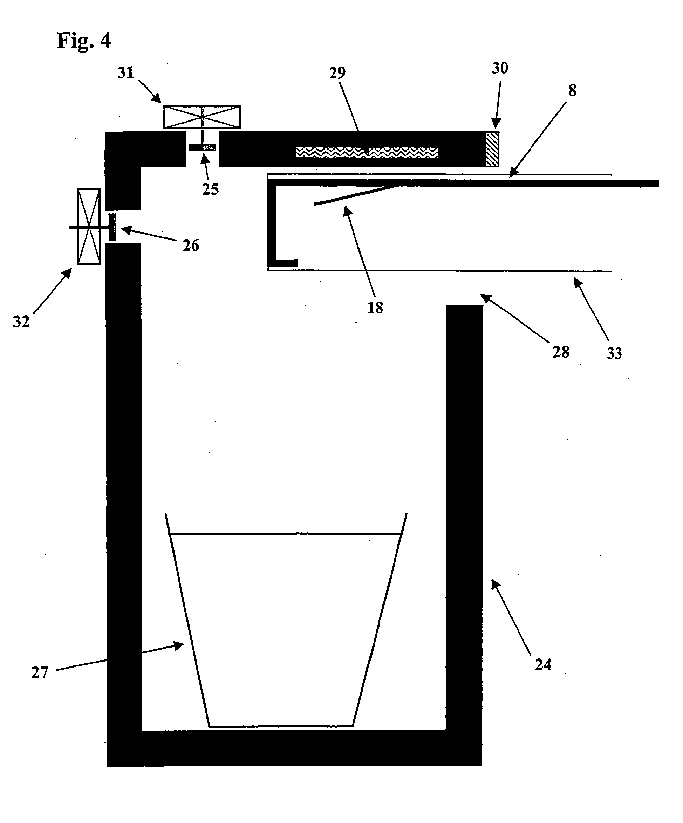

Figure 4 schematically shows a preferred embodiment of an apparatus for automatic unlocking according to the present invention. The apparatus 24 comprises a first movable magnet 25, a second movable magnet 26, a container 27, a slot 28, a detector 29 and a user interface 30. The first and second magnets 25 and 26 can be moved by magnetic actuators or solenoids 31 and 32, respectively. A lockable case 33 with locking member 8 comprising metal latch 18, not yet fully inserted into slot 28 of the apparatus is also shown. At this stage the two magnets 25, 26 are in a retracted position.

Detector 29 is adapted to detect if a case is fully inserted into slot 28. This may be done mechanically, electrically, electronically or optically or in another suitable way. It is also conceivable that the detector is able to detect if the case is inserted correctly. If the case is inserted, e.g., upside down user interface 30 may indicate a respective error message to a user.

RFID reader will read the "lock"/"unlock" bit from the radio-frequency identification (RFID) tag attached to the CD/DVD case. If said "lock"/"unlock" bit is in the "lock" state, the apparatus will not unlock the case, and optionally provide a suitable indication to the user through a user interface. If said "lock"/"unlock" bit is in the "unlock" state, an appropriate signal will be generated and supplied to the controller unit to unlock the case.

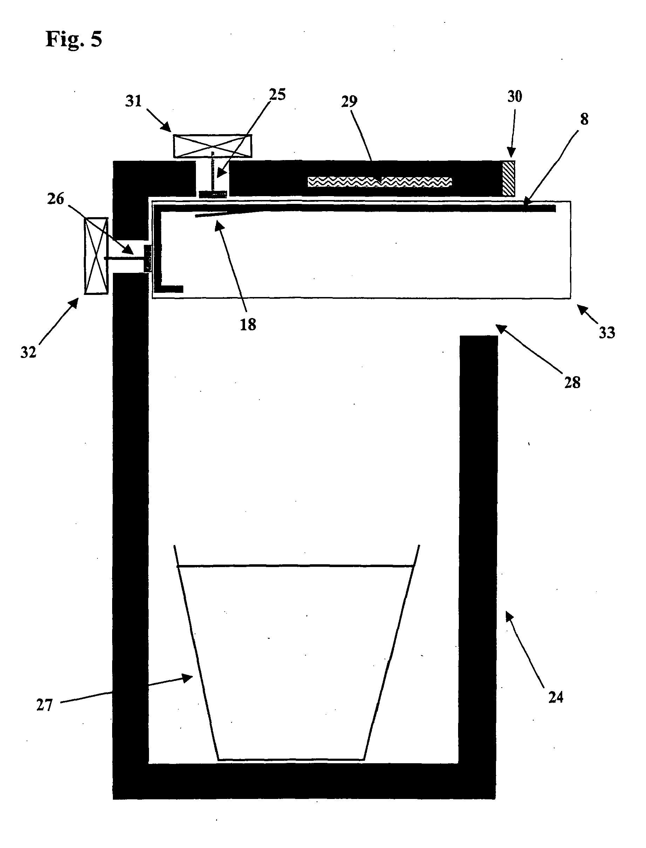

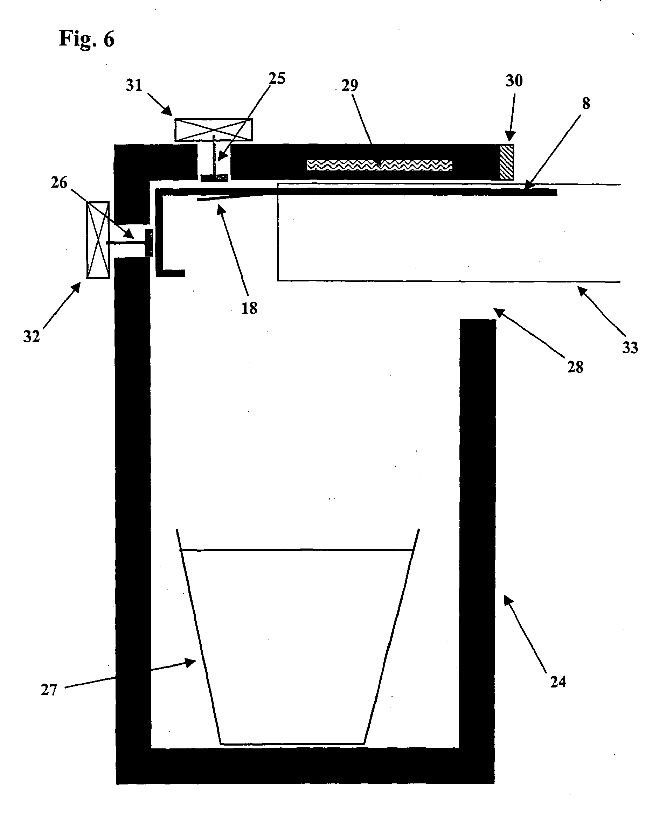

As shown in Fig. 5, the first magnet 25 can be moved by means of a motor or solenoid 31, until the magnetic force of first magnet 25 onto metal latch 18 suffices to bend or distort metal latch 18 upwards (as indicated in Fig. 5). Thus, the latch 18 disengages from the ridge 23 of the case and the locking member 8 becomes movable along its longitudinal direction. The second magnet 26 can be moved towards the locking member 8 by means of a motor or solenoid 32, until the magnetic force of second magnet 26 onto the metal piece or shim of locking member 8 suffices to attract the locking member 8 to the second magnet 26. Then, the locking member 8 attracted to the second magnet 26 is removed from the case 33 by withdrawal of the case 33 from the slot 28 by a user. This is indicated in Fig. 6, where the case 33 is already partially removed from the apparatus with the locking member 8 being still attached to the second magnet 26. Once the case is completely removed, the second magnet 26 retracts and thus releases itself from the locking member 8, which then falls into the container 27.

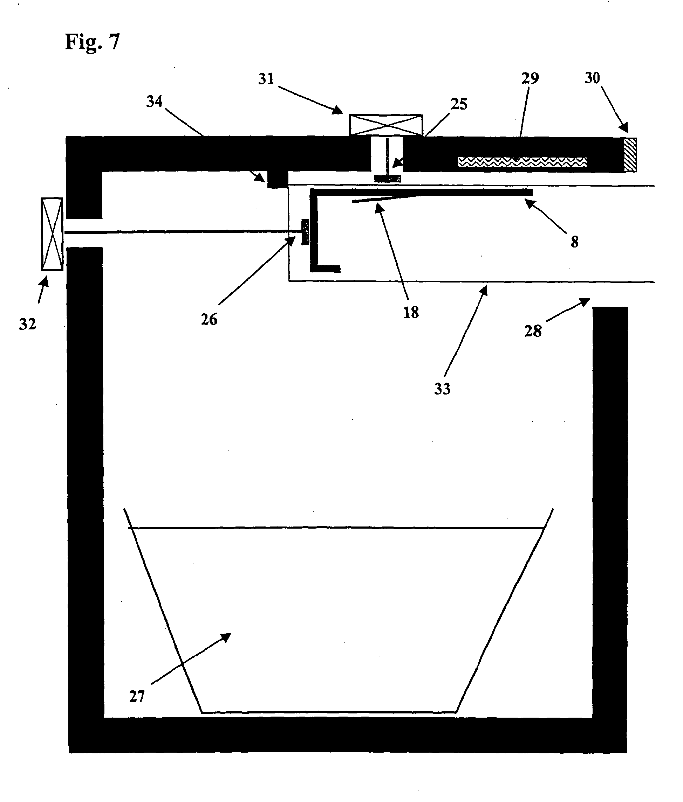

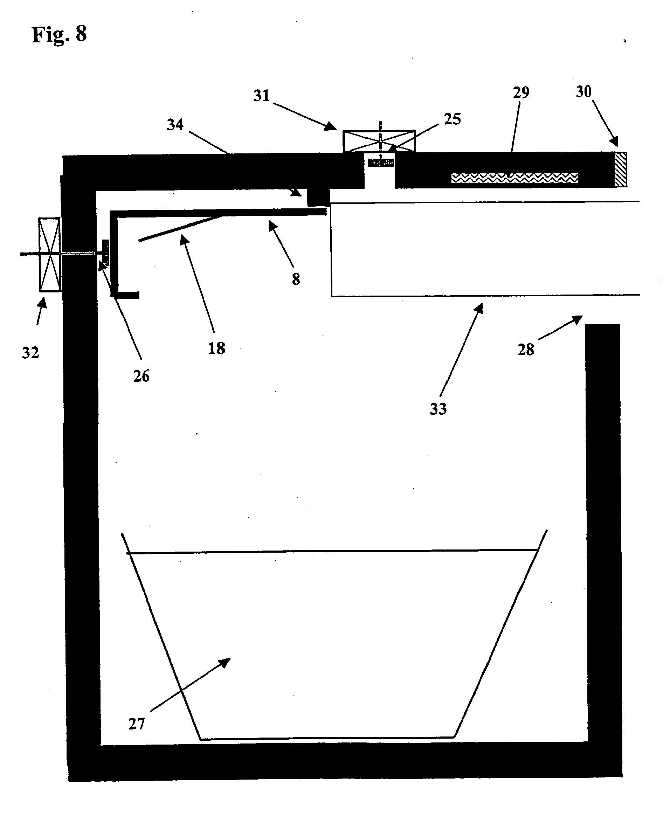

In another embodiment the locking member 8 attracted to the second magnet 26 is removed by retrieval of the second magnet 26. It is advantageous that the stopper 34 is arranged outside the area of the locking member, so that the stopper can occupy sufficient space to function reliably. An embodiment capable for this procedure is schematically shown in Fig. 7. Here, the case 33 is already fully inserted into slot 28 and both magnets 25, 26 are moved towards the case. Then, the second magnet 26 retracts into a position shown in Fig. 8, thereby separating the locking member 8 from the case 33. Further movement of second magnet 26 will release locking member 8 from the said magnet and the locking member 8 will fall into container 27. The unlocked case 33 may then be removed from the slot 28 by a user.

In another preferred embodiment magnets 25 and/or 26 are electromagnets. In that case it may suffice to just switch them on and off instead of moving them towards the case and retracting them again.

It is a benefit of the present invention that a system is provided which can be used as a stand-alone system, i.e. the system does not have to be coupled to a computer or a database and no communication to any external device is needed. This is advantageous in several ways: Firstly, the system is less vulnerable to failure, e.g., due to communication problems. Furthermore, the apparatus according to the present invention is less complex and can be easily combined with any kind of a purchase or rental system without any additional infrastructure (e.g., a network). Since the apparatus and the respective case only require a "lock"/"unlock"-bit to be present, it does not matter how or in what context said bit is written. Thus, the same apparatus may be used in completely different technical environments without any modification.

## Claims

1. Lockable CD/DVD case comprising a removable locking member (8), said case being mechanically locked if the locking member (8) is inserted into the case and unlocked if the locking member is removed from the case, wherein the case comprises a radio frequency identification (RFID) tag encoding at least a "lock"/"unlock"-bit.

2. Case according to claim 1, wherein the locking member (8) is manually insertable into the case.

3. Case according to claim 1 or 2, wherein the locking member (8) comprises a metal latch (18), which engages with a ridge (23) of the case, when the locking member (8) is fully inserted into the case, said latch (18) being inaccessible once the case is locked.

4. Apparatus for automatic unlocking a locked case according to any one of claims 1 to 3, comprising:
a) a receptacle (28) adapted to accommodate at least a portion of the case;
b) a detector (29) for detecting the presence of the case;
c) an RFID reader for reading at least the "lock"/"unlock"-bit;
d) a first magnet (25) for releasing the locking member;
e) a second magnet (26) for removing the locking member; and
f) a controller for controlling operation of the magnets in response to the state of said "lock"/"unlock" bit read by the RFID reader.

5. Apparatus according to claim 4, wherein the first and/or second magnet is movable.

6. Apparatus according to claim 4 or 5, wherein said first magnet (25) is an electromagnet or a permanent magnet and/or wherein said second magnet (26) is an electromagnet or a permanent magnet.

7. Apparatus according to any one of claims 4 to 6, further comprising a container (27) for collecting the removed locking member (8).

8. Apparatus according to any one of claims 4 to 7, wherein the receptacle (28) and the detector (29) are adapted to accommodate and to detect cases of different type and/or size, respectively.

9. Apparatus according to any one of claims 4 to 8, wherein the first and second magnets (25, 26) are adapted to provide a force along first and second directions, respectively.

10. Apparatus according to any one of claims 4 to 9, further comprising a user interface (30) adapted to indicate, if a case has or has not been unlocked.

11. Apparatus according to any one of claims 4 to 10, adapted to operate autonomously.

12. Apparatus according to any one of claims 4 to 11, further comprising at least one solenoid (31, 32) for moving the first magnet (25) and/or the second magnet (26).

13. Apparatus according to any one of claims 4 to 12, further comprising at least one linear motor for moving the first and/or the second magnet (25, 26).

14. Apparatus according to any one of claims 4 to 13, further comprising a locking member release means for release of the locking member (8) from the second magnet (26).

15. Method of automatically unlocking a mechanically locked case according to any one of claims 1 to 3, comprising the steps of:
a) detecting the case;
b) reading the RFID tag encoding at least a "lock"/"unlock"-bit;
c) unlocking the case, if the read bit is in the "unlock" state by releasing the locking member; and
d) physically separating the CD/DVD case and the locking member.

16. Method according to claim 15, further comprising the step of collecting the removed locking member in a container (27).

17. Method according to claim 15 or 16, wherein unlocking the case is performed by the following steps:
a) moving the first magnet (25) towards the case (33) and thereby disengaging the latch (18) of the locking member (8) from the ridge of the case (33);
b) moving the second magnet (26) towards the case (33) in order to attract the locking member (8);
c) retracting the second magnet (26) together with the locking member (8) from the case (33) or retracting the case (33) from the receptacle (28), with the locking member (8) remaining attracted to the second magnet (26); and
d) removing the locking member (8) from the second magnet (26).
